# EUROPEAN PATENT SPECIFICATION

(11) **EP 2 505 330 B1**
(45) Date of publication and mention of the grant of the patent: **31.08.2016**
(21) Application number: 11160051.6
(22) Date of filing: 28.03.2011
(51) Int. Cl.: B29C 45/14, B05D 1/24, B05D 3/14, B05D 7/14, F16L 58/10, F16L 33/34, F16L 47/24, B29K 705/00

(54) **Fitting elements or piping units having improved adherence to plastic material**
Verbindungsstücke oder Rohreinheiten mit verbesserter Haftung an Kunststoffmaterialien
Éléments de fixation ou unités de conduit dotés d'une adhérence améliorée aux matériaux plastiques

(43) Date of publication of application: 03.10.2012
(73) Proprietor: Mir Arastirma ve Gelistirme Anonim Sirketi, Esenler 34220 Istanbul (TR)
(72) Inventor: Deveci, Süleyman, 34220, Istanbul (TR); Oksuz, Yalcin, 34220, Istanbul (TR); Gemici, Zafer, 34220, Istanbul (TR)
(74) Representative: Sevinç, Erkan

(56) References cited:
- EP-A1- 1 609 694
- WO-A1-00/59990
- WO-A1-96/14533
- JP-A- 2 041 219

## Description

### Technical Field of the Invention

The present invention relates to a method for improving adherence of plastic material on metal parts of the fitting elements or piping units. More specifically the invention is directed to a method for coating polymers onto metal surfaces of the fitting elements or piping units by way of a combination of plasma treatment and fluidized bed coating steps to obtain high adherence. The invention also pertains to the fitting elements or piping units, such as nipples, having metallic inserts obtainable by the method of the invention.

### Background of the Invention / Prior Art

Metal parts of the fitting elements in the piping applications are manufactured generally by way of injection moulding that involves bringing the metallic structures in contact with polymeric materials. The fitting or coupling elements may be produced by way of placing metallic inserts with inner or outer circumference of plastic parts so as to form the piping units or fitting items such as nipples. Degree of adhesion between the metals and plastics is, however quite weak and lacking of satisfactory chemical or physical bonds. This not only causes an inferior leak tightness, but also a poor durability against an exterior torque which is applied generally at the time of coupling separate pipes via those fitting elements. Eventually, if further measures might not be taken, the metal parts may freely rotate without adhering to the plastic parts upon applying a radial torsion while the piping couplings may face leakage problems because of the poor adherence.

These obstacles have been tried to be resolved by providing a threaded surface in order to provide tight fitting between the fitting elements and plastic pipes. Further, anti-twist torsion tongues suitably formed on the surface are also provided on the fitting elements so as to prevent disengagement and uncontrolled rotational twist (creep) of the metal parts. These additional measures however bear many drawbacks with inadequate technical performance because the subject modifications increase the amount of metal used for manufacturing of each unit, and lacking of chemical or physical bonds between two different materials still causes disengagement and creep of the metal unit when it is subjected to relevant forces, such as torsion.

WO-A-96/14533 discloses a two-step coating process for producing a pipe coupling arrangement wherein the metal pipe or pipe fitting is coated with an epoxy primer and then subjected to hot dipping in a fluid bed so that the metal part would be coated further with an identical plastic material that will be overmoulded subsequently. The primer coating is applied basically for improving the adherence of polymers to the metallic surface.

Fitting elements that are treated with a fluidized bed process are very common in the art, wherein the metal article is dipped into the treatment chamber of a fluid bed apparatus and coated with different kind of polymer powders in order to form a polymer layer which is capable of improving adhesion between the metal and plastics, as disclosed for instance in WO-2000/59990 A1. The process further comprises overmoulding the metal surface with a plastic material in order to provide the resulting fitting element having improved adherence properties. The metal article is heated either before or after applying the adhesive polymer.

Based on the figurative prior art as mentioned above, the inventors noted that the adhesion performance of the polymer coated on the metal article may be improved by a surface modification step prior to the fluid bed coating procedure. This prior step has advantages in many respects, and is useful for eliminating the need for a primer layer as specified in the relevant art. The process of the invention is also useful to eliminate the generic problems of the prior art such as creep and tightness problems of metal-plastic interlayers.

These effects have been achieved by using a pre-treatment step conducted in an plasma reactor which is operated under vacuum conditions. Further details and aspects of the invention are substantiated in the following description.

### Summary of the Invention

The present invention solves aforementioned problems of prior art by way of a novel method comprising the steps of:
a) providing a metal insert,
b) treating said metal insert in a plasma reactor under vacuum with supply of oxygen gas for modifying and oxidizing the metal surface,
c) dipping the metal insert into a fluidized bed and applying adhesive polymer powders onto the surface of said insert,
d) overmoulding the metal surface with a plastic material by injection moulding, and forming a fitting element or a piping unit,
wherein;
after step b), the metal insert is heated up to a temperature above the melting point of the adhesive polymer, the heating being carried out prior or after the powder coating in the fluidized bed, whereby said adhesive polymer being selected from maleic anhydride grafted polyolefins.

By virtue of the surface modification in the plasma reactor, metal inserts are firmly adhered to the plastic section, and tensile shear strength and leak tightness properties of the resulting product is considerably improved. Preferably, the plasma treatment of step b) further comprises a treatment step with an inert gas prior to the oxygen treatment.

### Brief Description of the Figures

Figure 1 is a simplified representation of a Cu-Zn alloy system having an oxide layer before plasma treatment of the present invention.
Figure 2 is a simplified representation of a Cu-Zn alloy system having an improved oxide layer after plasma treatment according to the present invention.
Figure 3 shows a basic fluidized bed arrangement used in the method of the present invention.
Figure 4a is cross sectional view of a metal insert prior to treatment with method of the present invention wherein the metal insert contains threads in at least part of its exterior surface.
Figure 4b is a masked form of the metal insert shown in Figure 4a.
Figure 4c is cross sectional view of the masked metal insert shown in Figure 4b after coating an adhesive polymer according to the present invention.
Figure 4d shows the metal insert treated according to the present invention after removing the mask and overmoulding a plastic material.
Figure 5a is cross sectional view of a metal insert prior to treatment with method of the present invention wherein the metal insert contains an internally threaded portion in at least part of its interior surface.
Figure 5b is a masked form of the metal insert shown in Figure 5a.
Figure 5c is cross sectional view of the masked metal insert shown in Figure 5b after coating an adhesive polymer in unmasked regions according to the present invention.
Figure 5d shows the metal insert treated according to the present invention after removing the mask and overmoulding a plastic material.

### Detailed Description of the Invention

The present invention is directed to the object of increasing the adhesion in between metal and plastic parts of the fitting elements and piping units in order to strengthen their durability against radial torsions and prevent creeping thereof especially in mounting the fitting elements in piping applications.

It is known that applying a suitable polymer to metallic surfaces of coupling elements prior to overmoulding considerably increase the torsion-creeping resistance as well as sealing properties against high pressure fluid flow. Because of complexity of their shapes, it is a general practice in the art to coat such coupling items in a fluidized bed powder coating apparatus.

Alternative ways, such as electrostatic powder coating of the metallic parts is very limited in use, because the powders need to be sprayed onto the desired part of the complex shaped geometry of the metal article whereas it is essential that powders are to be electrostatically chargeable. The fluidized bed powder coating or dip coating processes are rather useful as they permit use of any kind of polymer in coating of an article having any complex shape and dimension.

According to the present invention, a coating thickness in the range of 100-400 µm is preferred. To achieve this object, particle size and flow rate of the polymer powders, and possibly duration of coating procedure in the fluid bed chamber may be optimized according to the routine practice of the art.

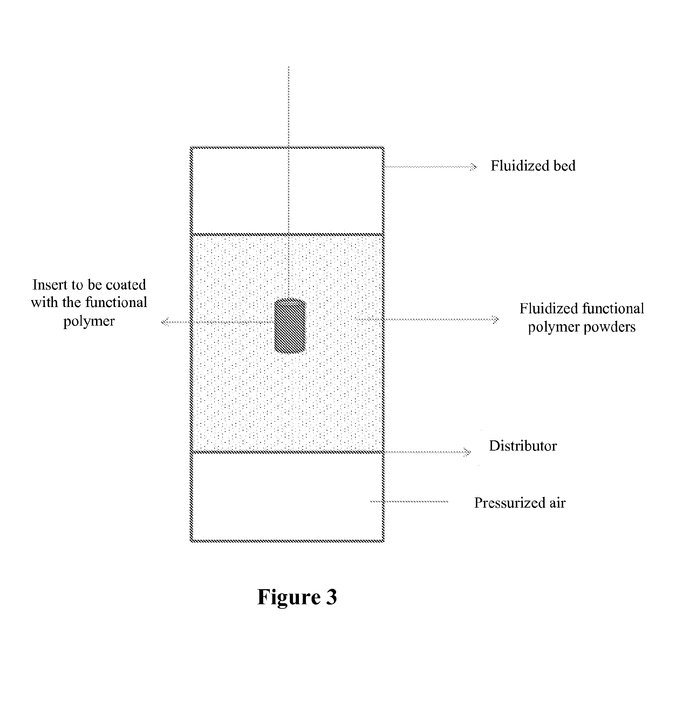

Referring now to the simplified drawing of Figure 3, the fluidized bed involved in the present invention is preferably equipped with a lower and an upper housing holding pressurized air and polymer powders respectively. In between the housings, a distributor is placed to adjust the air flow through the upper housing. According to the present invention, the metal part to be coated shall be heat treated to a temperature above the melting temperature of the coating polymer. The metal article of the fitting element may be heated before or after the fluid bed procedure in order to melt the polymer powders on the surface of said metal article.

In the adhesion of polymers on metallic surfaces, it is known that carboxylic groups (-COOH) of the polymers behave as Lewis acid whereas the oxide layer on the metal behaves as Lewis base. By transfer of electrons to carboxylic group covalent bonding is constituted between polymers and metal surfaces. Therefore, formation of an oxide layer on the metal surface on which the polymer is to be coated may be highly advantageous. There is always a natural oxide layer on the metal surfaces with variable layer thickness and composition. This thickness and composition depend on the moisture and the temperature of the circumstances.

Changing the composition of the oxide layer can favour strength and durability of adhesion between metal surfaces and grafted polymers. Starting from this basic idea, the inventors experienced and noted that treating the metallic coupling elements in a vacuum plasma chamber with oxygen prior to powder coating in the fluidized bed provides excellent adhesion properties in metal-polymer interlayers which considerably increases the torsion durability and eliminate creeping problems. In a preferred embodiment, the pre-treatment procedure as required in the present invention is carried out by way of a two-step process wherein the article is firstly treated with an inert gas followed by an oxygen treatment as defined above.

The inventors also noted that the fitting elements having metallic parts made of Cu-Zn alloys, such as brass, is very suitable for applying the procedure above due to the reasons explained in the following description.

Surface structure of Cu-Zn alloy substrates, when carries out an oxidation, may contain a layer consisting mainly of oxides of zinc and copper. However, oxidation of copper results in a biphasic oxide layer consisting of Cu₂O and CuO. On the other hand, oxidation of zinc produces mainly ZnO. Despite the fact that all these oxides may facilitate adhesion as mentioned above, each of them provides different affinities for polymer materials. CuO is known as an oxidation state of copper which has higher stability as compared to Cu₂O. Therefore, Cu₂O may be regarded as more preferable for adhesion purposes.

Besides these facts, ZnO provides the at most affinity for adhesion to maleic anhydride grafted polymeric materials, such as MAH grafted thermoplastics. Thus, one of the objectives of the present invention is providing a method for coating polymers onto the metallic part of a fitting element made of Cu-Zn alloy wherein the metallic part is treated with a selective oxidation for increasing the ZnO proportion and for reducing the amount of CuO as much as possible.

In the course of developing such a method for achieving the these objects, it was found that exposing the Cu-Zn alloy to a two-step plasma treatment provided rapid cleaning of the alloy surface and formation of the oxide layers CuO, Cu₂O and ZnO. The inventors further noted that the plasma treatment as envisaged in the scope of the invention permits selective oxidation of Cu and Zn causing concentration of ZnO to increase relatively more than CuO and Cu₂O. It was even observable that Cu content in the uppermost surface of the alloy underwent an oxidation state through Cu₂O relatively more than CuO. This clearly implicate one of the advantages of the invention with excellent selectivity in providing an oxide layer predominantly comprising ZnO which has crucial benefits in terms of the adherence properties as stated *supra.*

The plasma treatment equipment used in the procedure of the present invention may include a compartment for establishing a sealed low pressure medium and electrodes positioned around said compartment. The equipment further comprises a reactor, power supplier and a vacuum pump as conventionally used in many applications. The power supplier may be in the form of a RF (radio frequency), LF (low frequency) or MW (Micro Wave) supply as well known by the specialists in the field.

According to the first method step, metallic parts are placed into the plasma reactor and interior pressure of the reactor is decreased by applying a vacuum. According to a preferred embodiment, said pressure is reduced to a value between 0.05 and 0.30 mbar, more preferably to a value between 0.10 and 0.12 mbar. Then the internal pressure of the reactor is increased to a value between 0.10 and 0.50 mbar, more preferably to 0.20-0.30 mbar by injecting an inert gas into the reactor. Argon is the preferred inert gas for use in the present invention. The inert gas, preferably argon plasma is applied onto the samples for at least 5 minutes, more preferably at least 10 minutes, and most preferably for 15 minutes. It is to be appreciated that the duration of the plasma treatment may be more or less than the above stated treatment intervals depending on the amount of impurities and dirtiness on the surface. Moreover, the power applied in this term may be in the range of 50-2000 W depending on the volume of the reactor. In the second method step, the inert gas is disconnected and synchronously, oxygen is started to be injected into the reactor, and the oxygen is applied onto the samples for at least 10 minutes, more preferably for 20 minutes by applying a power approximately of 100 W. In a preferred application, the medium pressure during the oxygen treatment is adjusted to a value between 0.10 and 0.20 mbar. Later on, the internal pressure of the reactor is increased to the atmospheric pressure and the samples whose surfaces are modified are obtained as ready for a coating process in a fluidized bed. In the case of a brass surface, a layer substantially of zinc oxide is advantageously obtained with the plasma treatment of the present invention.

The first step of the disclosed method that is carried out under vacuum with exposure to inert gas provides effective removal of the impurities and surface activation of the copper-zinc alloy. With the effect of the inert plasma physical ablation of the impurities on the sample surface is achieved in a rapid and efficient manner. The *in situ* surface cleaning continues during oxygen plasma treatment since the impurities are forced to undergo an oxidation reaction which results in an additional cleansing effect. Therefore, the invention is advantageous especially in the event that excessive amount of dirtiness exist on the sample surface.

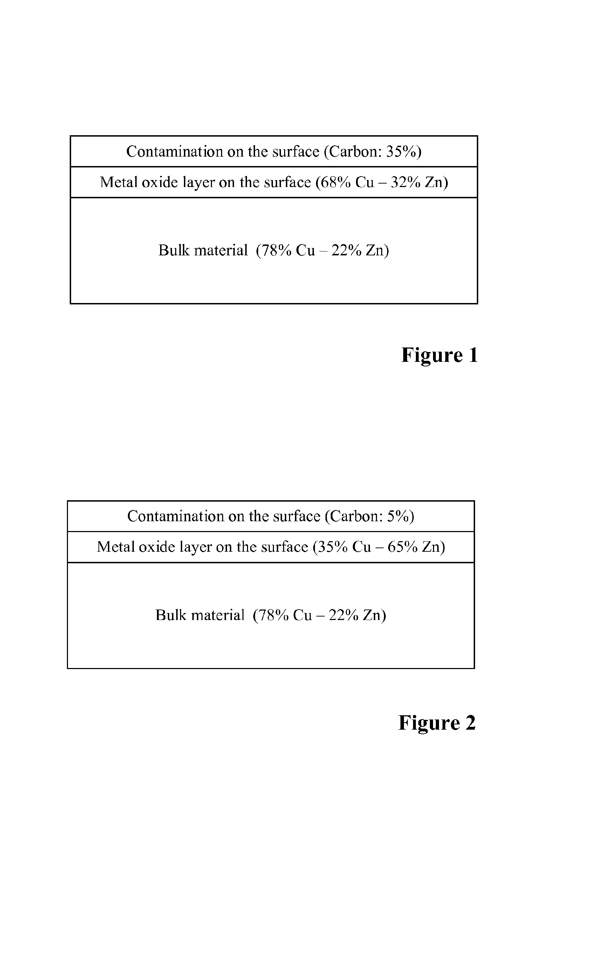

To show the effect of the two-step plasma treatment on a copper-zinc structure, Electron Spectroscopy for Chemical Analysis (ESCA) was sequentially performed on a sample before and after plasma treatment. In the analysis, carbon, oxygen, copper and zinc contents were investigated by using Mg-K alpha source. Depth analyses are carried out for all of the samples by bombarding with argon ions. In mentioned ion bombardment treatment parameters of energy (1000eV) and time (3 min.) are stabilized for each cycle. According to the results as shown in Figures 1 and 2 excellent oxidation of the alloy is attained in a selective manner. Accordingly, relative amount of the zinc oxide is considerably increased while the copper oxides undergo dramatic decrease by virtue of the plasma conditions. The analysis confirms the envisaged advantages with respect to the selective oxidation (promoting ZnO) and cleansing of the surface without any need of additional cleaning agents. The inventors report that effect of the plasma treatment is improved when the sample is closer to the electrodes.

The subsequent step of the method according to the present invention involves applying of an adhesive polymer onto the metallic part of the fitting element which part is treated as in the above procedure. The adhesive polymer as referred herein is of a thermoplastic nature. In the course of optimizing and selecting the appropriate polymer materials to be coated on a metallic sample, the inventors noted that when the said polymer is grafted with maleic anhydride, the objective adhesion performance is further increased. The polymers are maleic anhydride grafted polyolefins (PP-g-PO) which may provide satisfactory adhesion both with the metallic surface to be coated and the subsequent plastics that are over moulded. Excellent results were obtained when maleic anhydride grafted polypropylene (PP-g-MAH) or maleic anhydride grafted polyethylene (PE-g-MAH) is used as the adhesive polymer. The coating procedure is carried out in a fluidized bed containing dispersed particles of the adhesive polymer, preferably having average particle size of less than 500 µm. Considering that the above polymers are commercially exploited with a particle size around 3 mm, they may need to be granulized into the desired particle size before the fluid bed application.

To provide a polymer structure which acquires better adhesion with metallic parts, especially with Cu-Zn substrates, it is noted that modifying the polymers with maleic anhydride gives surprising results with plasma treated alloys. This feature is attributed to the better interaction of MA with metals as treated with the present procedure. Non-polar main chain and grafted polar chains are thermodynamically incompatible. As a consequence, polar branched chains are situated actively on the surface of polymer resulting in a contribution to the desired adhesion effect.

Metallic components of fitting elements, generally having complex geometric shapes, may be heated prior or after the fluidized bed coating procedure. Heating the article prior to dipping into the fluidized bed is particularly preferred. A coating procedure of 2-10 seconds is typically sufficient.

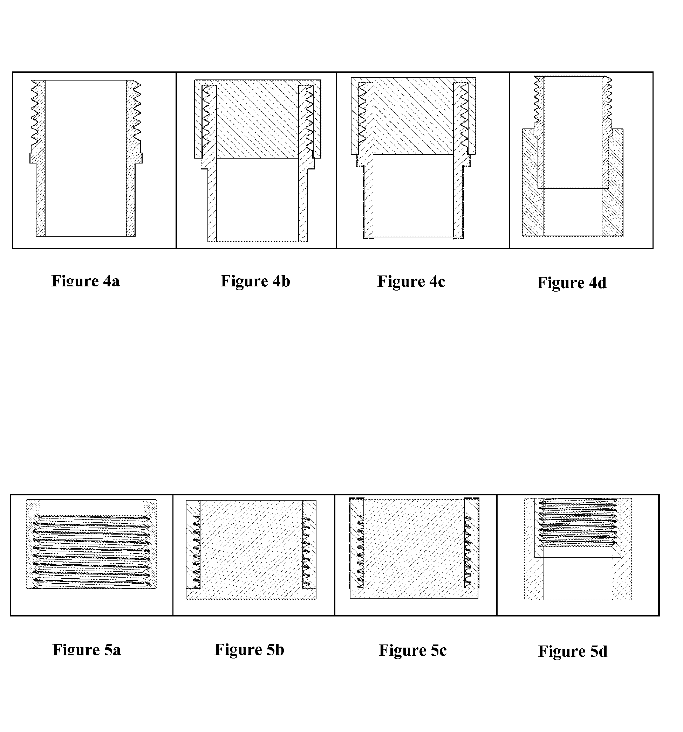

The metal part of the fitting element may have inner or outer threads in the form of a conventional insert as shown in Figures 4a-4d and Figures 5a-5d. The threads may be in either or both sides of the annular article. Plastics may be moulded to some specific region of the metal part as illustrated in Figures 4d and 5d. The novel method of the present invention is very suitable for selectively coating the adhesive polymers only to those regions that are brought into contact with injected plastics. This object is achieved by masking the suitable regions where adhesive polymer is not desired. Referring to Figures 4b and 5b, an illustrative masking is shown as a special cap screwed to the threaded portions of the metal insert. The subsequent coating procedure in the fluidized bed provides an adhesive layer only in un-masked regions as shown in Figures 4c and 5c.

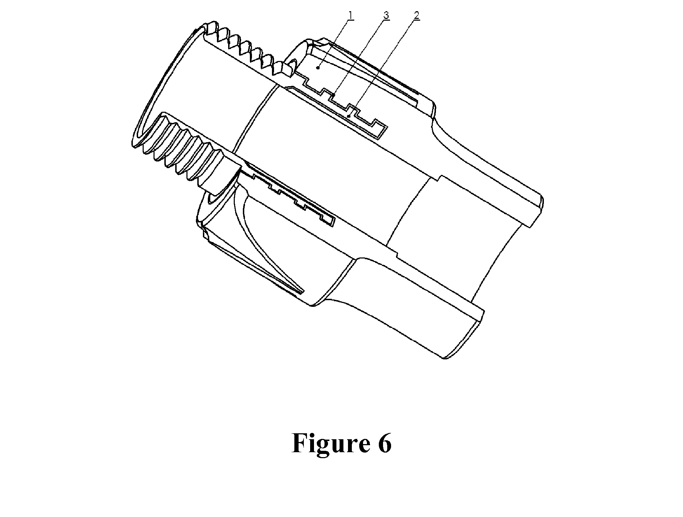

The mask is then removed in order to prepare the metal insert for fabrication of a fitting element. Thereafter, metal insert is subjected to plastic moulding where the metal part is combined with a plastic part. An exemplary illustration, in the form of a nipple is shown in Figure 6. Accordingly, there is provided a nipple having a plastic part (1) receiving a metal insert (2) wherein an adhesive polymer interlayer (3) is provided in the metal-plastic contact area. In a preferred application route, the metal article is cured for homogenous distribution of the polymers before overmoulding the plastic material.

With superior adhesive properties acquired in the aforementioned contact area, the creep and sealing problems are considerably eliminated. The following examples are given solely for illustrating the beneficial technical effects of the present invention.

### Example 1

A pair of metal plates made of brass were treated in a plasma reactor first with argon, and then, after evacuation of the space, with oxygen in order to modify their surfaces. The metal plates were then heated and dipped into a fluidized bed which is fed with PP-g-MAH particles so as to provide a polymer layer on said metal surfaces. Then, metal plates were taken out from the fluidized bed and cured at 200°C for about 5 min. in order to melt the adhered polymer particles for homogenous dispersal of the melted layer. The metal plates were then superposed in a partial section thereof along with applying a hot press wherein the pair of metal plates were stuck into each other to form an integrated body.

Following the above procedure, five groups of samples, each group containing nine pairs of metal plates were prepared. In each group, seven of the pairs of metal plates (Plasma A, B, C, D, E, F, G) were prepared following the above procedure whereas additional two pairs of plates (Control A and B) were prepared without applying the plasma treatment. The samples were subjected to tensile lap-shear strength tests in accordance with ISO 4587 standards by applying a tension from two opposing ends of the integrated body. Dimensions of the metal plates and the overlapping sticking area inbetween these plates were arranged as prescribed in ISO 4587 standards. The values of the break forces (N) just at the time of fracture of each plate combination were recorded. Test results are given in Table I.

**Table I. Tensile lap-shear strength tests**

| Force (N), at the moment of fracture | | | | | | | | | |
|---|---|---|---|---|---|---|---|---|---|
| Group | Plasma A | Plasma B | Plasma C | Plasma D | Plasma E | Plasma F | Plasma G | Control A | Control B |
| | | | | | | | | | |
| 1 | 4760 | 4941 | 4700 | 4101 | 4792 | 4535 | 5148 | 2745 | 3667 |
| 2 | 4478 | 4691 | 4648 | 4676 | 4788 | 4937 | 4741 | 3466 | 2996 |
| 3 | 4562 | 4719 | 4744 | 4603 | 4979 | 4745 | 4548 | 3132 | 3487 |
| 4 | 4580 | 4777 | 5068 | 4757 | 4671 | 4674 | 4582 | 3025 | 3213 |
| 5 | 4644 | 4755 | 4708 | 4707 | 4642 | 4658 | 4513 | 3558 | 2311 |
| **Average** | **4604,8** | **4776,6** | **4773,6** | **4568,8** | **4774,4** | **4709,8** | **4706,4** | **3185,2** | **3134,8** |

### Example 2

Five groups of fitting joints, each containing twenty four samples were provided. The first group of the fitting joints were made of a metal insert and a plastic part wherein the metal insert was not coated with any adhesive polymer. The second and third groups were prepared according to the procedure of Example 1 with the exception that metal insert was not treated with plasma. Fourth and fifth groups were prepared following an identical procedure with Example 1. The samples were exposed to pressure-leak tightness test in accordance with ISO 15874-3 standards. In each group, number of samples that passed the tightness test was recorded. Results are given in Table II.

**Table II. Tensile lap-shear strength tests**

| **Group** | **Sample** | **Number of samples** | **Samples passed the test** |
|---|---|---|---|
| 1 | Fitting joints produced with metal inserts which were NOT coated with PP-g-MAH | 24 | 0 |
| 2 | Fitting joints produced with metal inserts coated with PP-g-MAH | 24 | 15 |
| 3 | Fitting joints produced with metal inserts coated with PP-g-MAH | 24 | 15 |
| 4 | Fitting joints produced with plasma treated metal inserts which are coated with PP-g-MAH | 24 | 24 |
| 5 | Fitting joints produced with plasma treated metal inserts which are coated with PP-g-MAH | 24 | 24 |

To summarize the results, the plasma treatment prior to applying the adhesive polymer greatly enhanced the adhesion performance between the metal and polymer surfaces. The plasma treatment has also improved the leaktightness of the samples. Reproducible samples were obtainable with the method of the present invention. The results were consistent and precise. It was also realized that the method of the present invention is very promising for obtaining a fitting element wherein metal parts are firmly adhered to the plastic parts, and creeping/leakage problems are advantageously eliminated. Further aspects and advantages of the present invention shall be apparent to those skilled in the art in view of the above description and appended drawings.

## Claims

1. A method for producing a fitting element or a piping unit comprising the steps of:
a) providing a metal insert,
b) treating said metal insert in a plasma reactor under vacuum with supply of oxygen gas for modifying and oxidizing the metal surface,
c) dipping the metal insert into a fluidized bed and applying adhesive polymer powders onto the surface of said insert,
d) overmoulding the metal surface with a plastic material by injection moulding, and forming a fitting element or a piping unit,
wherein;
after step b), the metal insert is heated up to a temperature above the melting point of the adhesive polymer, the heating being carried out prior or after the powder coating in the fluidized bed, whereby said adhesive polymer being selected from maleic anhydride grafted polyolefins.

2. The method for producing a fitting element according to claim 1 wherein the treatment in the plasma reactor comprises the step of supplying an inert gas prior to the oxygen treatment for conditioning and cleaning of the alloy surface.

3. The method for producing a fitting element according to claim 2, wherein the inert gas is argon.

4. The method for producing a fitting element according to claim 1, wherein the adhesive thermoplastic material is selected from maleic anhydride grafted polypropylene, maleic anhydride grafted polyethylene or a blend thereof.

5. The method for producing a fitting element according to claim 2, wherein the treatment with inert gas plasma under vacuum is carried out under a pressure between 0.05 and 0.30 mbar.

6. The method for producing a fitting element according to claim 1 or 2, wherein the power supplied to the reactor chamber in the course of inert gas and oxygen plasma treatment steps ranges from 50 to 2000 W.

7. The method for producing a fitting element according to claim 1, wherein the oxygen plasma is applied for at least 20 minutes.

8. The method for producing a fitting element according to claim 1, wherein the medium pressure during the oxygen plasma treatment is adjusted to a value between 0.10 and 0.20 mbar.

9. The method for producing a fitting element according to claim 1, wherein the insert is made of brass.

10. The method for producing a fitting element according to claim 1, wherein the metal insert comprises inner or exterior threaded portions in at least part of its inner or exterior surface.

11. The method for producing a fitting element according to claim 1, wherein the method further comprises the step of masking the metal insert in those regions where the polymer coating in the fluidized bed is not desired.

12. The method for producing a fitting element according to claim 1, wherein the thickness of the adhesive polymer coating varies in the range of 100-400 µm.

13. The method for producing a fitting element according to claim 1, wherein the fitting element is a nipple.

14. A fitting element of piping unit obtainable by the method of claim 1.

## Patentansprüche

1. Verfahren zum Herstellen eines Passelements oder einer Rohrleitungseinheit, mit den Schritten:
a) Bereitstellen eines metallischen Einsatzteils,
b) Behandeln des metallischen Einsatzteils in einem Plasmareaktor unter Vakuum unter Zufuhr von Sauerstoffgas zum Modifizieren und Oxidieren der Metalloberfläche,
c) Eintauchen des metallischen Einsatzteils in ein fluidisiertes Bett und Aufbringen von Klebstoffpolymerpulver auf die Oberfläche des Einsatzteils,
d) Überformen der Metalloberfläche mit einem Kunststoffmaterial durch Spritzgießen, und Bilden eines Passelements oder einer Rohrleitungseinheit,
**dadurch gekennzeichnet, dass** nach Schritt b) das metallische Einsatzteil auf eine Temperatur oberhalb des Schmelzpunkts des Klebstoffpolymers erwärmt wird, wobei die Erwärmung vor oder nach der Pulverbeschichtung in dem fluidisierten Bett ausgeführt wird, wobei das Klebstoffpolymer aus Maleinsäureanhydrid-gepfropften Polyolefinen ausgewählt ist.

2. Verfahren zum Herstellen eines Passelements gemäß Anspruch 1, **dadurch gekennzeichnet, dass** die Behandlung in dem Plasmareaktor den Schritt des Zuführens eines Inertgases vor der Sauerstoffbehandlung zum Konditionieren und Reinigen der Legierungsoberfläche umfasst.

3. Verfahren zum Herstellen eines Passelements nach Anspruch 2, **dadurch gekennzeichnet, dass** das Inertgas Argon ist.

4. Verfahren zum Herstellen eines Passelements nach Anspruch 1, **dadurch gekennzeichnet, dass** das thermoplastische Klebstoffmaterial ausgewählt ist aus Maleinsäureanhydrid-gepfropftem Polypropylen, Maleinsäureanhydrid-gepfropftem Polyethylen oder einer Mischung daraus.

5. Verfahren zum Herstellen eines Passelements nach Anspruch 2, **dadurch gekennzeichnet, dass** die Behandlung mit einem Inertgasplasma unter Vakuum unter einem Druck von zwischen 0,05 und 0,30 mbar ausgeführt wird.

6. Verfahren zum Herstellen eines Passelements nach Anspruch 1 oder 2, **dadurch gekennzeichnet, dass** die Leistung, die der Reaktorkammer im Verlaufe der Inertgas- und Sauerstoffplasma-Behandlungsschritte zugeführt wird, im Bereich von zwischen 50 und 2000 Watt liegt.

7. Verfahren zum Herstellen eines Passelements nach Anspruch 1, **dadurch gekennzeichnet, dass** das Sauerstoffplasma während mindestens 20 Minuten angewendet wird.

8. Verfahren zum Herstellen eines Passelements nach Anspruch 1, **dadurch gekennzeichnet, dass** der mittlere Druck während der Sauerstoffplasmabehandlung auf einen Wert von zwischen 0,10 und 0,20 mbar eingestellt wird.

9. Verfahren zum Herstellen eines Passelements nach Anspruch 1, **dadurch gekennzeichnet, dass** das Einsatzteil aus Messing hergestellt ist.

10. Verfahren zum Herstellen eines Passelements nach Anspruch 1, **dadurch gekennzeichnet, dass** das metallische Einsatzteil Innen- oder Außengewindeabschnitte in zumindest einem Teil seiner inneren oder äußeren Oberfläche aufweist.

11. Verfahren zum Herstellen eines Passelements nach Anspruch 1, **dadurch gekennzeichnet, dass** das Verfahren weiterhin den Schritt des Maskierens des metallischen Einsatzteils in solchen Bereichen umfasst, in denen die Polymerbeschichtung in dem fluidisierten Bett nicht erwünscht ist.

12. Verfahren zum Herstellen eines Passelements nach Anspruch 1, **dadurch gekennzeichnet, dass** die Dicke der Klebstoffpolymerbeschichtung in dem Bereich von zwischen 100 und 400 µm variiert.

13. Verfahren zum Herstellen eines Passelements nach Anspruch 1, **dadurch gekennzeichnet, dass** das Passelement ein Nippel ist.

14. Passelement einer Rohrleitungseinheit, erhältlich durch das Verfahren nach Anspruch 1.

## Revendications

1. Procédé de production d'un élément de raccord ou d'un élément de tuyauterie comprenant les étapes de :
a) préparation d'un insert métallique,
b) traitement dudit insert métallique dans un réacteur à plasma sous basse pression avec fourniture d'oxygène gazeux afin de modifier et d'oxyder la surface métallique,
c) trempage de l'insert métallique dans un lit fluidifié et application de poudres polymères adhésives sur la surface dudit insert,
d) surmoulage de la surface métallique avec une matière plastique par moulage par injection, et formation d'un élément de raccord ou d'une unité de tuyauterie,
dans lequel ;
après l'étape b), l'insert métallique est chauffé jusqu'à une température supérieure au point de fusion du polymère adhésif, le chauffage étant mis en oeuvre avant ou après le revêtement de poudre dans le lit fluidifié, de telle sorte que ledit polymère adhésif est sélectionné parmi des polyoléfines greffées à l'anhydride maléique.

2. Procédé de production d'un élément de raccord selon la revendication 1, dans lequel le traitement dans le réacteur à plasma comprend l'étape de fourniture d'un gaz inerte avant le traitement à l'oxygène afin de conditionner et de nettoyer la surface d'alliage.

3. Procédé de production d'un élément de raccord selon la revendication 2, dans lequel le gaz inerte est de l'argon.

4. Procédé de production d'un élément de raccord selon la revendication 1, dans lequel le matériau thermoplastique adhésif est sélectionné parmi un polypropylène greffé à l'anhydride maléique, un polyéthylène greffé à l'anhydride maléique ou un mélange de ceux-ci.

5. Procédé de production d'un élément de raccord selon la revendication 2, dans lequel le traitement par plasma de gaz inerte sous basse pression est mis en oeuvre sous une pression comprise entre 0,05 et 0,30 mbar.

6. Procédé de production d'un élément de raccord selon la revendication 1 ou 2, dans lequel la puissance délivrée à la chambre de réaction au cours des étapes de traitement par plasma d'oxygène et de gaz inerte est comprise entre 50 et 2000 W.

7. Procédé de production d'un élément de raccord selon la revendication 1, dans lequel le plasma d'oxygène est appliqué pendant au moins 20 minutes.

8. Procédé de production d'un élément de raccord selon la revendication 1, dans lequel la pression moyenne au cours du traitement par plasma d'oxygène est ajustée à une valeur comprise entre 0,10 et 0,20 mbar.

9. Procédé de production d'un élément de raccord selon la revendication 1, dans lequel l'insert est réalisé en laiton.

10. Procédé de production d'un élément de raccord selon la revendication 1, dans lequel l'insert métallique comprend des parties filetées interne ou externe sur au moins une partie de sa surface interne ou externe.

11. Procédé de production d'un élément de raccord selon la revendication 1, dans lequel le procédé comprend en outre l'étape de masquage de l'insert métallique dans certaines zones dans lesquelles le revêtement de polymère dans le lit fluidifié n'est pas désiré.

12. Procédé de production d'un élément de raccord selon la revendication 1, dans lequel l'épaisseur du revêtement polymère adhésif varie dans la plage de 100 à 400 µm.

13. Procédé de production d'un élément de raccord selon la revendication 1, dans lequel l'élément de raccord est un mamelon.

14. Elément d'assemblage d'une unité de tuyauterie pouvant être obtenu par le procédé selon la revendication 1.
